(19) **Europäisches Patentamt**

**European Patent Office**

**Office européen des brevets**

(11) **EP 0 924 503 B1**

(12) **EUROPEAN PATENT SPECIFICATION**

(45) Date of publication and mention
of the grant of the patent:
**07.07.2004 Bulletin 2004/28**

(51) Int Cl.⁷: **G01N 1/06**
// B26D7/26

(21) Application number: **97811004.7**

(22) Date of filing: **19.12.1997**

(54) **A device for use in an ultramicrotome**

Gerät zur Verwendung in einem Ultramikrotom

Un dispositif utilisable dans un ultramicrotome

(84) Designated Contracting States:
**AT CH DE FR GB IT LI NL SE**

(43) Date of publication of application:
**23.06.1999 Bulletin 1999/25**

(73) Proprietor: **Anton Meyer & Co.AG**
**2560 Nidau (CH)**

(72) Inventor: **Studer, Daniel**
**3293 Dotzigen (CH)**

(74) Representative: **Clerc, Natalia et al**
**Isler & Pedrazzini AG**
**Postfach 6940**
**8023 Zürich (CH)**

(56) References cited:
**BE-A- 440 928**         **DD-A- 156 199**
**DE-C- 913 112**         **US-A- 4 697 489**

• **PATENT ABSTRACTS OF JAPAN vol. 006, no. 188 (P-144), 28 September 1982 & JP 57 100335 A (TAMURA ISAMU), 22 June 1982,**

**Description**

The present invention concerns a device for holding a diamond blade for use in an ultramicrotome.

It is known to perform the ultramicrotomy (UM) and cryo-ultramicrotomy (cryo-UM) with a knife containing a diamond cutting blade. Typical section thickness in UM and cryo-UM is 10 nm to 200 nm, depending on the application. The sections are mainly used for transmission electron microscopy. For the ultramicrotomy at room temperature usually the cutting is performed on a knife mounted in a boat which contains water. The water forms a horizontal surface behind the cutting edge of the knife. Due to the surface tension the sections float on the water surface and can be collected. The water acts as a lubricant during the sectioning process.

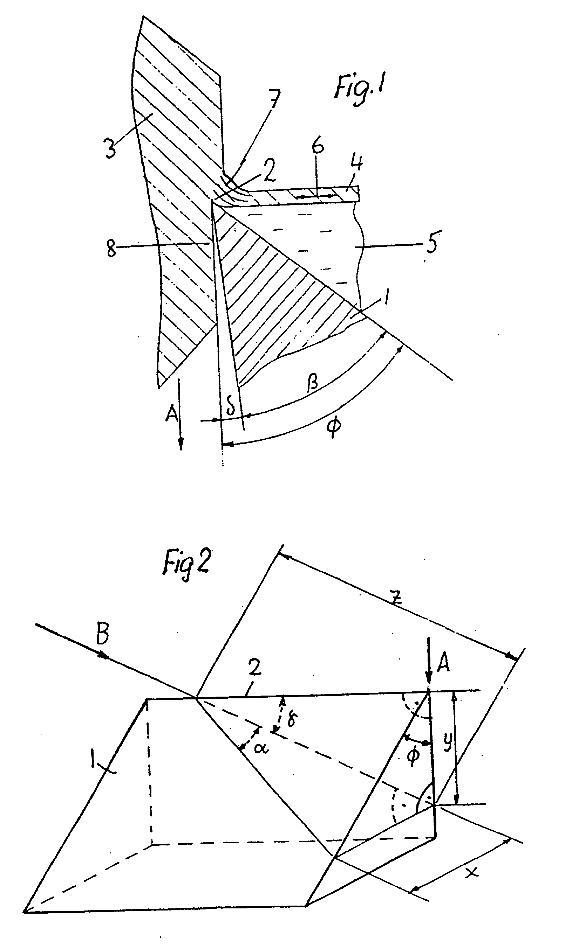

Depending on the sectioning angle $\phi$ of the knife the section undergoes considerable distortion (compression) during cutting (Fig. 1). In Fig. 1 1 designates the diamond blade or knife with the cutting edge 2. 3 is the sample. The sample 3 may be one of a great variety of industrial or biological samples. A is the vertical movement of the sample 3. 4 is the cut section floating on a water bed 5. 6 designates the direction of compression in the section 4. 7 is a region of intense shearing, and 8 is the region of compression in the sample 3.

Water sensitive samples 3 have to be cut dry. Due to the missing lubrication and to the friction on the knife surface the sections 4 are compressed. In cryo-UM most samples have to be cut dry. The amount of compression depends on different factors:

- The sectioning angle of the knife.
- The hardness of the sample.
- The triboelectrical properties of the sample.

The most critical factor is the sectioning angle $\phi$. The sectioning angle $\phi$ is the sum of the wedge angle $\beta$ of the knife 1 and the clearance angle $\delta$. It was shown that reducing the wedge angle $\beta$ results in a reduction of compression. However, the wedge angle $\beta$ may not be reduced ad infinitum. We have found an angle of 30° to be a limit. A further reduction results in a lower cutting edge 2 quality and in a considerably shorter service time of the knife 1. In cryo-UM the compression in sections was found almost equal with the sectioning angle $\phi$. Therefore, a knife 1 working with a sectioning angle $\phi$ of 40° (wedge angle $\beta$ 30°, clearance angle $\delta$ 10°) would result in a compression in the sections 4 of approximately 40%.

In order to preserve the original ultrastructure and form of matter, it would be desirable to eliminate the distortion (compression) in the sections 4.

Document DE-C-913 112 discloses a microtome comprising a knife which is attached between two symmetrically arranged leaf spring and which is vibrated parallel to its cutting edge with two electromagnetic actuators.

The problem to be solved with the present invention is to create a device for use in an ultramicrotome which reduces the compression of the sections. This problem is solved by the combination of features of the claims.

Exemplary embodiments of the present invention are hereinafter disclosed with reference to Fig. 2 to 6 of the drawings, in which

Fig. 2          is a diagram showing the effective sectioning angle $\alpha$ when the blade or knife 1 is moved in the direction of the edge 2 during cutting,

Fig. 3 and 4    are a side view and a front view of a first embodiment, and

Fig. 5 and 6    are similar views of a second embodiment.

In the present invention an oscillating movement of the blade or knife 1 parallel to the cutting edge 2 and perpendicular to the cutting direction A is used to eliminate or at least strongly reduce compression of the sections 4. When the knife 1 moves in the direction of the cutting edge 2 while the probe 3 moves in the direction A an effective cutting direction B results which forms an acute angle $\gamma$ with the edge 2 (Fig. 2). If y is the vertical movement of the probe 3 per time unit and z is the effective relative movement between knife 1 and probe 3 in the same time unit it can be seen from Fig. 2 that

$$\tan \alpha = \frac{x}{z}; \sin \gamma = \frac{y}{z}; \tan \phi = \frac{x}{y}.$$

It follows:

$$\sin \gamma \cdot \tan \phi = \frac{y}{z} \cdot \frac{x}{y} = \frac{x}{z} = \tan \alpha.$$

When the knife 1 vibrates, the effective sectioning angle $\alpha$ varies (maximum effective sectioning angle $\alpha$ equal to $\phi$, minimal effective sectioning angle $\alpha$ close to 0°). The theoretical value of compression reduction is as follows: An assumed mean effective sectioning angle $\alpha$ depends on the amplitude C (mm) and the frequency $\nu$ (Hz) of the vibration and on the cutting speed v (mm/sec). Only small effective sectioning angles $\alpha$ are considered. Under this assumption it can be shown that

$$\tan \alpha = (v/C \cdot \nu) \tan \phi.$$

To give an example, the following parameters are assumed: $\phi = 45°$; $v = 0,1$ mm/sec; C = 1 μm; $\nu = 1$ kHz.

It follows

$$\tan \alpha = (0,1 \text{ mm/sec}) / (0,001 \text{ mm·}1000 \text{ Hz}) \cdot 1 = 0,1$$

resulting in a mean effective sectioning angle $\alpha$ of about 5,7°.

The theoretical assumptions seem to be correct because on a prototype the oscillating knife has shown to significantly reduce the compression of the sections 4.

In the ultramicrotomy the persons skilled in the art have taken extreme care to shield the microtome from all possible external and internal vibrations because they adversely effect the cutting result. The inventor has overcome this prejudice and could show that by vibrating the knife 1 exactly parallel to the cutting edge 2 no adverse effect of the vibration was observed.

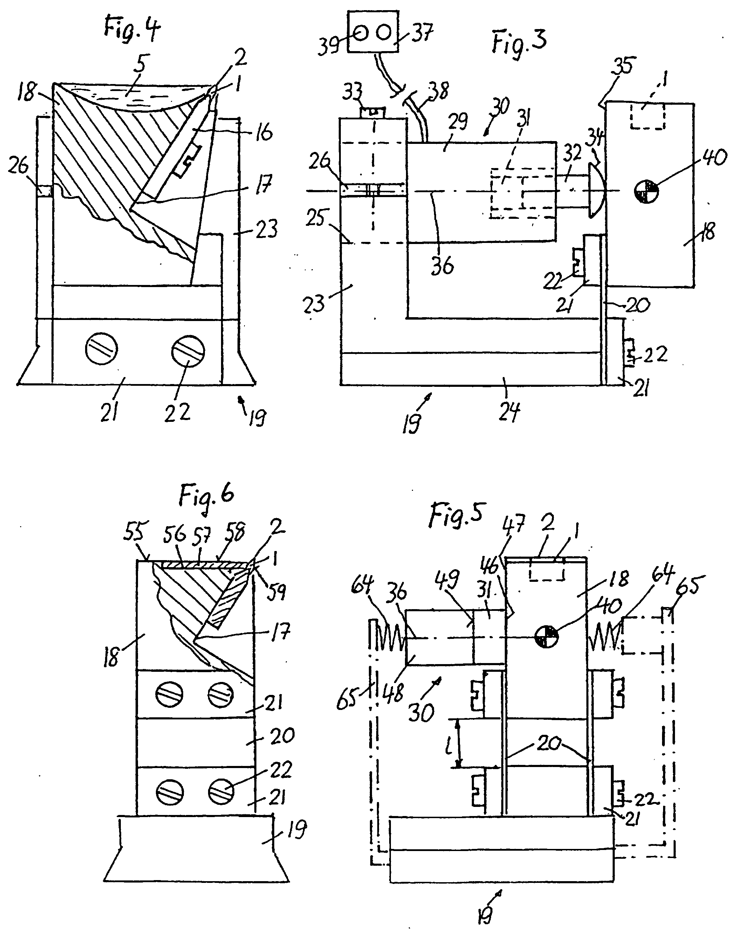

A first embodiment of the invention is shown in Fig. 3 and 4. The blade 1 is sintered in a bronze holder 16 or vacuum brazed in a tungsten carbide holder. The holder 16 is mounted on an inclined face of a recess 17 in a block 18. The block 18 is mounted to a holder 19 by means of a leaf spring 20. The plane of the leaf spring 20 is substantially vertical and perpendicular to the cutting edge 2. The spring 20 is mounted to the block 18 and the holder 19 by flat plates 21 and screws 22.

An arm 23 extends upward from the base 24 of the holder 19. The arm 23 has a cylindrical horizontal boring 25 and a slot 26 on one side. The cylindrical housing 29 of a vibrator 30 with a piezoelectric transducer 31 and an actuating rod 32 is held in the boring 25 by means of a screw 33. The spherical face end 34 of the rod 32 is slightly pressed against a plane face 35 of the block 18. The axis 36 of the vibrator 30 is parallel to the cutting edge 2. The spring 20 may be slightly bent towards the vibrator 30 in the unloaded state before the vibrator 30 is mounted in position such that with the deflection of the spring 20 required for the preload force of the block 18 against the rod 32 the spring 20 gets plain and vertical. The axis 36 passes through the center of gravity 40 of the block 18.

The vibrator 30 is connected to an oscillator 37 by means of a cable 38. Two adjustment knobs 39 on the oscillator 37 allow the selection of the amplitude and frequency of the oscillation of the vibrator 30. Preferably, the frequency is selected in the ultrasound range above 15 kHz. The required amplitude is then only in the range of 10-1000 nm.

Fig. 5 and 6 show a second embodiment. Similar parts are designated with the same reference numerals so that a detailed description of those parts is omitted. The embodiment of Fig. 5 and 6 has two parallel leaf springs 20 of equal active length 1. The upper and lower ends of the active length 1 of the two springs 20 lay in horizontal planes which are parallel to the cutting edge 2. This arrangement has the advantages that the cutting edge 2 moves exactly parallel to itself whereas in the first embodiment it makes a minute pendulum motion, and that vibrations around a vertical axis are strongly restricted.

In this embodiment the piezoelectric thickness transducer 31 is directly attached, e.g. bonded with one of its plane end faces 46 to a vertical face 47 of the block 18. A counter mass 48 is fastened to the opposite end face 49 of the transducer. Instead of or in addition to directly bonding the face 46 and 49 to the block 18 and counter mass 48 a pressing force by springs 64 may be used which may bear against arms 65 attached to the holder 19. This variant is shown in dash-dotted lines in Fig. 5.

This arrangement of the vibrator 30 has the advantage that considerably higher accelerations of the block 18 towards the counter mass 48 are possible. This is particularly of advantage when higher frequencies are used, e.g. in the ultrasound range because the accelerations increase with the square of the frequency.

The embodiment of Fig. 6 is shown in the variant for dry ultramicrotomy, e.g. without the water 5 in a trough behind the blade 1. Instead, the upper, horizontal face 55 of the block 18 has a depression 56 which is filled with a plastic insert 57 with a plane upper surface 58 the plane of which intersecting the front face 59 of the blade 1 at an angle of 75° to 85°, preferably about 80°. Therefore, when the blade 1 is set at the recommended clearance angle of 10° the surface 58 is exactly horizontal which greatly facilitates observation of the cut sections 4 with a stereo microscope since no refocussing is required when moving the microscope horizontally. A material with good triboelectrical properties for the insert 57 is an epoxy resin.

Instead of the piezoelectric transducer 31 other types of transducers could be used, e.g. magnetic transducers. A suitable transducer would be a moving coil transducer similar to the one used in moving coil loud-speakers. The moving coil would be mounted to the block 18 and connected to the oscillator 37. The (e. g. permanent) magnet surrounding the coil and acting as counterweight could be elastically suspended (e.g. like the block 18 in Fig. 5) on the holder 19. The axis of the coil would be coincident with the axis 36.

**Claims**

1. A device for use in an ultramicrotome, comprising:

   - a holder (19),
   - a block (18) attached to the holder (19) by at least one spring (20),
   - a diamond blade (1) attached to the block (18), with a cutting edge (2) which in operation is substantially horizontal, and
   - a vibrator (30) cooperating with the block (18) to vibrate it parallel to the cutting edge (2).

2. The device of claim 1, wherein the at least one spring is a leaf spring (20), the plane of which being substantially perpendicular to the cutting edge (2), one end of the leaf spring (20) being attached to the holder (19) and the opposite end being attached to the block (18).

3. The device of claim 2, comprising two parallel leaf springs (20) of equal active length (1).

4. The device of one of claims 1 to 3, wherein the vibrator (30) comprises a piezoelectric transducer (31).

5. The device of one of claims 1 to 4, wherein a housing (29) of the vibrator (30) is fastened to the holder (19) and the vibrator (30) comprises an actuating element (32) which is in direct or indirect contact with the block (18).

6. The device of claim 4, wherein one face (46) of the piezoelectric transducer (31) is attached to or pressed against the block (18) and an opposite face (49) is attached to or pressed against a counter mass (48).

7. The device of one of claims 1 to 6, wherein the axis (36) of the vibrator (30) passes in the vicinity of the center of gravity (40) of the block (18).

8. The device of one on claims 1 to 7, wherein the block (18) contains behind the blade (1) a plastic insert (57) with a plane upper surface (58) which is parallel to the cutting edge (2) and the plane of which forms an angle of 75° to 85°, preferably about 80°, with the front face (59) of the blade (1), the insert (57) preferably consisting of an epoxy resin.

**Patentansprüche**

1. Eine Vorrichtung zur Verwendung in einem Ultramikrotom, wobei die Vorrichtung aufweist:

   - einen Halter (19),
   - einen Block (18), welcher mittels mindestens einer Feder (20) mit dem Halter (19) verbunden ist,
   - eine Diamantklinge (1), welche mit dem Block (18) verbunden ist, wobei die Klinge eine Schneidkante (2) aufweist, welche bei Gebrauch annähernd horizontal ausgerichtet ist, und
   - einen Vibrator (30), welcher mit dem Block (18) zusammenwirkt, um diesen parallel zur Schneidkante (2) zu vibrieren.

2. Die Vorrichtung gemäss Anspruch 1, wobei die mindestens eine Feder eine Blattfeder (20) ist, deren Ebene annähernd senkrecht zur Schneidkante (2) verläuft, wobei ein Ende der Blattfeder (20) am Halter (19) angebracht ist und das entgegenüberliegende Ende am Block (18) angebracht ist.

3. Die Vorrichtung gemäss Anspruch 2, beinhaltend zwei parallele Blattfedern (20) von gleicher aktiver Länge 1.

4. Die Vorrichtung gemäss einem der Ansprüche 1 - 3, wobei der Vibrator (30) einen piezoelektrischen Transducer (31) aufweisst.

5. Die Vorrichtung gemäss einem der Ansprüche 1 - 4, wobei ein Gehäuse (29) des Vibrators (30) am Halter (19) befestigt ist und der Vibrator (30) ein Betätigungselement (32) aufweist, welches in direktem oder indirektem Kontakt mit dem Block (18) ist.

6. Die Vorrichtung gemäss Anspruch 4, wobei eine Stirnseite (46) des piezoelektrischen Transducer (31) am Block (18) angebracht oder gegen diesen angepresst ist und eine gegenüberliegende Stirnseite (49) an einer Gegenmasse (48) angebracht ist oder gegen diese gepresst ist.

7. Die Vorrichtung gemäss einem der Ansprüche 1 - 6, wobei die Achse (36) des Vibrators (30) benachbart zum Gravitationscenter (40) des Blocks (18) verläuft.

8. Die Vorrichtung gemäss einem der Ansprüche 1 - 7, wobei der Block (18) hinter der Klinge (1) einen plastischen Einsatz (57) mit einer oberen planen Oberfläche (58) aufweist, welche parallel zur Schneidkante (2) verläuft, und wobei die Ebene dieser Oberfläche einen Winkel von 75° - 85°, vorzugsweise circa 80°, mit der vorderen Stirnfläche (59) der Klinge (1) bildet, und wobei der Einsatz (57) vorzugsweise aus einem Expodiharz besteht.

**Revendications**

1. Dispositif à utiliser dans un ultramicrotome, comprenant:

   un support (19);
   un bloc (18) attaché au support (19) par au moins un ressort (20);
   une lame diamant (1) attachée au bloc (18), présentant une arête de coupe (2) qui, en service, est essentiellement horizontale; et
   un vibreur (30) qui coopère avec le bloc (18) pour faire vibrer celui-ci parallèlement à l'arête de coupe (2).

2. Dispositif suivant la revendication 1 dans lequel le au moins un ressort est un ressort à lame (20), dont le plan est essentiellement perpendiculaire à l'arête de coupe (2), une première extrémité du ressort à lame (20) étant attachée au support (19), et l'extrémité opposée étant attachée au bloc (18).

3. Dispositif suivant la revendication 2 comprenant deux ressorts à lame parallèles (20) de longueur active égale (1).

4. Dispositif suivant l'une quelconque des revendications 1 à 3 dans lequel le vibreur (30) comprend un transducteur piézoélectrique (31).

5. Dispositif suivant l'une quelconque des revendications 1 à 4 dans lequel un boîtier (29) du vibreur (30) est attaché au support (19), et le vibreur (30) comprend un élément de commande (32) qui est en contact direct ou indirect avec le bloc (18).

6. Dispositif suivant la revendication 4 dans lequel une première face (46) du transducteur piézoélectrique (31) est attachée à ou est pressée contre le bloc (18), et une face opposée (49) est attachée à ou est pressée contre une contre-masse (48).

7. Dispositif suivant l'une quelconque des revendications 1 à 6 dans lequel l'axe (36) du vibreur (30) passe dans le voisinage du centre de gravité (40) du bloc (18).

8. Dispositif suivant l'une quelconque des revendications 1 à 7 dans lequel le bloc (18) contient derrière la lame (1) un insert en plastique (57) présentant une surface supérieure plane (58) qui est parallèle à l'arête de coupe (2), et dont le plan forme un angle compris entre 75° et 85°, de préférence environ 80°, avec la face avant (59) de la lame (1), l'insert (57) étant de préférence constitué d'une résine époxy.

Fig.1

Fig 2

Fig. 4

Fig. 3

Fig. 6

Fig. 5